# EUROPÄISCHE PATENTSCHRIFT

(11) **EP 2 388 455 B1**
(45) Veröffentlichungstag und Bekanntmachung des Hinweises auf die Patenterteilung: **05.04.2017**
(21) Anmeldenummer: 11154785.7
(22) Anmeldetag: 17.02.2011
(51) Int. Cl.: F02C 6/12, F01D 25/24

(54) **Abgasturbolader**
Exhaust gas turbocharger
Turbocompresseur à gaz d'échappement

(30) Priorität: 20.05.2010 DE 102010021114
(43) Veröffentlichungstag der Anmeldung: 23.11.2011
(73) Patentinhaber: Benteler Automobiltechnik GmbH, 33102 Paderborn (DE)
(72) Erfinder: Smatloch, Dr. Christian, 33100, Paderborn (DE); Grußmann, Elmar, 33184, Altenbeken (DE)
(74) Vertreter: Ksoll, Peter

(56) Entgegenhaltungen:
- EP-A2- 2 180 163
- DE-A1- 10 028 160
- JP-A- 2002 054 447
- JP-A- 2003 293 779
- JP-A- 2006 161 573
- JP-A- 2007 002 791

## Beschreibung

Die Erfindung betrifft einen Abgasturbolader gemäß den Merkmalen im Oberbegriff von Patentanspruch 1.

Verbrennungskraftmaschinen, insbesondere im Einsatz für Kraftfahrzeuge, werden in zunehmendem Maße durch Strömungsmaschinen aufgeladen, um den Wirkungsgrad weiter zu steigern und damit den Kraftstoffverbrauch zu senken. Bevorzugt werden als Strömungsmaschinen Turbolader eingesetzt. Dabei werden die Turbolader und insbesondere die Turboladergehäuse sehr genau an die Leistungscharakteristik des jeweiligen Motors angepasst.

Damit der Turbolader selber mit einem hohen Wirkungsgrad arbeiten kann, ist die Einhaltung exakter Spaltmaße vor, während und nach dem Betrieb von besonderer Bedeutung. Zwischen den einzelnen Betriebszuständen treten Temperaturunterschiede von bis zu mehreren 100°C auf, die bei den verschiedenen Bauteilen und eingesetzten Materialien sowie Materialstärken voneinander abweichende Ausdehnungen der Bauteile untereinander zur Folge haben. Im Falle der Ausdehnung ändern sich auch die Spaltmaße, sodass ein unerwünschtes Blowby innerhalb des Turboladers auftreten kann. Hierdurch reduziert sich der Wirkungsgrad des Turboladers. Ebenfalls kann es dazu kommen, dass die Bauteile durch unterschiedliche Ausdehnungen miteinander in Kontakt kommen. Schlimmstenfalls entstehen Kollisionen der Bauteile untereinander, die Schäden oder aber einen totalen Ausfall des Turboladers mit sich bringen.

Weiterhin ist die Gewichtsreduzierung aller im Kraftfahrzeugbau eingesetzten Materialien und Komponenten von besonderer Bedeutung. Hierbei steht die Herstellung eines Turboladers, insbesondere eines Turboladergehäuses in Blechbauweise unter dem Aspekt einer Möglichkeit, einen Abgasturbolader besonders gewichtsoptimiert herzustellen.

In der DE 100 22 0 52 A1 wird die Entkoppelung von abgasführenden Bauteilen und tragenden bzw. dichtenden Außenstrukturen vorgeschlagen. Während die abgasführenden Bauteile eines Turboladers hohen thermischen Belastungen ausgesetzt sind, sodass sie im Betrieb glühen, sind die thermischen Belastungen der dichtenden Außenstrukturen bedeutend geringer. Allerdings unterliegt auch das Außengehäuse besonders in den Bereichen der Anbindung an das Lagergehäuse eines Turboladers und auch an den Einströmseiten des relativ heißen Abgases sehr hohen thermischen und strömungstechnischen Belastungen. Weiterhin sind aus der JP 2007 002791 A, der EP 2 180 163 A2 sowie der JP 2002 054447 A gebaute Abgasturboladergehäuse bekannt.

Das Außengehäuse eines Abgasturboladers besteht in der Regel aus umgeformten Blechschalen, die üblicherweise über thermische Fügeverfahren mit Lagerflanschen verschweißt sind. Ebenfalls mit den Lagerflanschen gekoppelt, ist ein Innengehäuse des Abgasturboladers.

In der Regel liegen die Innengehäuse an den Lagerflanschen an oder sind zusätzlich mit diesen stoffschlüssig gekoppelt. Hier kann es jedoch im Falle des Anliegens über die verschiedenen thermischen Ausdehnungskoeffizienten zu Undichtigkeiten und somit zu einem Blowby kommen. Im Falle einer stoffschlüssigen Koppelung ist die Wärmeeinflusszone des thermischen Fügevorgangs geometrisch und werkstofftechnisch durch den thermischen Fügevorgang geschwächt. An dieser Stelle kann es unter extremen Belastungen zu Ermüdungsbrüchen oder aber auch Rissbildungen kommen.

Aufgabe der vorliegenden Erfindung ist es daher, ausgehend vom Stand der Technik, die Dichtigkeit und die Dauerhaltbarkeit eines Abgasturboladers derart zu erhöhen, dass thermische Belastungen nicht zu einem frühen Bauteilversagen führen.

Die zuvor genannte Aufgabe wird durch einen Abgasturbolader mit den Merkmalen von Patentanspruch 1 gelöst.

Vorteilhafte Ausführungsformen der vorliegenden Erfindung sind Bestandteil der abhängigen Patentansprüche.

Der erfindungsgemäße Abgasturbolader, welcher ein Außengehäuse, ein Innengehäuse und ein Turbinenrad aufweist, wobei das Außengehäuse mit einem Lagerflansch stoffschlüssig verbunden ist und das Innengehäuse formschlüssig mit dem Lagerflansch gekoppelt ist und ein an dem Innengehäuse ausgebildeter Kragen einer innenliegenden Kante des Lagerflansches in Richtung der Turbinenraddrehachse zumindest abschnittsweise zur Anlage kommt, ist dadurch gekennzeichnet, dass der Kragen die Kante hinterschneidet und in einem Fügeabschnitt am lagerflanschseitigen Ende des Kragens umlaufend mittels thermischem Fügen mit diesem gekoppelt ist.

Unter einem Kragen ist im Rahmen der Erfindung eine Ausstellung zu verstehen, die einen kreisrunden Ausschnitt in dem Innengehäuse charakterisiert. Der Kragen weist dabei mit seiner Ausstellung in Richtung der Turbinenraddrehachse. Bei der Koppelung des Innengehäuses mit dem Lagerflansch über den Kragen mit der innenliegenden Kante ist insbesondere zu verstehen, dass der Kragen von einem Innenraum des Innengehäuses wegzeigend ausgebildet ist, sodass er in der Kante des Lagerflansches zur Anlage kommt. Hierdurch ergibt sich insbesondere der Vorteil, dass eine optimale Positionierung des Innengehäuses in radialer und axialer Richtung ermöglicht ist, wodurch wiederum ein Anschleifen bzw. ein Kontakt des Turbinenrades im Betrieb vermieden wird.

Durch die zumindest abschnittsweise Anlage zwischen Innengehäuse und Lagerflansch über den Kragen und die Kante wird eine formschlüssige Koppelung sichergestellt. Diese formschlüssige Koppelung kompensiert weiter die benötigten Fertigungstoleranzen, die innerhalb des Produktionsprozesses des Abgasturboladers vorhanden sind. Ein Abgasturbolader mit optimaler Spaltbreite kann daher durch eine erfindungsgemäße Koppelung hergestellt werden.

Der Kragen ist zu seinem lagerflanschseitigem Ende hin sich in seinem Durchmesser vergrößernd ausgebildet. Hierunter ist im Rahmen der Erfindung zu verstehen, dass der Kragen in Richtung des mit dem Innengehäuse zu koppelnden Lagerflansches sich in seinem Durchmesser vergrößernd ausgebildet ist. Der Kragen hat so eine aufgetulpte Form. Hierdurch ergeben sich wiederum zum einen strömungstechnische Vorteile, zum anderen wird durch die aufgetulpte bzw. aufgebördelte Formgebung der in dem Kragen auftretende Spannungsverlauf homogenisiert und/oder vermindert.

Dabei kommen der Kragen und die Kante formschlüssig zur Anlage, so dass der Kragen die Kante hinterschneidend angeordnet ist. Durch die sich im Durchmesser vergrößernde Ausgestaltung des Lagerflanschseitigen Endes des Kragens ergibt sich ein formschlüssiger Sitz zwischen dem Kragen und der Kante. Der Kragen hintergreift die Kante, sodass eine Rastfunktion oder aber auch Passung ausgebildet ist. Ein besonders fester Sitz zwischen Innengehäuse und Lagerflansch stellt sich somit als erfindungswesentlicher Vorteil ein.Der Kragen hintergreift die Kante und in einem Fügeabschnitt am lagerflanschseitigen Ende des Kragens ist der Kragen mit der Kante umlaufend mittels thermischem Fügen gekoppelt. Hierdurch ist sichergestellt, dass die Fügenaht nicht der direkten Strömung des heißen Abgases ausgesetzt ist. Eine Bauteilschwächung in diesem Bereich, hervorgerufen durch die Wärmeeinflusszone des thermischen Fügeprozesses sowie die Fügenaht selber sind folglich nicht der direkten Strömung des heißen und hoch korrosiven Abgases ausgesetzt. Dies wirkt sich wiederum besonders vorteilig auf die Dauerhaltbarkeit des erfindungsgemäßen Abgasturboladers aus.

Der Kragen und die Kante sind stoffschlüssig über eine radial umlaufende Fügenaht miteinander gekoppelt. Zur weiteren Verstärkung der Koppelung zwischen Innengehäuse und Lagerflansch wird zusätzlich zu der formschlüssigen Verbindung eine stoffschlüssige Verbindung hergestellt. Dies wirkt sich wiederum positiv auf die Dauerhaltbarkeit der Verbindung, sowie auf die Dichtigkeit der Verbindung aus.

Bevorzugt weist der Kragen in einem Fußbereich in einem Querschnitt einen Biegeradius auf. Der Kragen ist im Rahmen der Erfindung vorzugsweise als Durchzug ausgebildet. Der Durchzug weist gegenüber dem Innengehäuse, von dem er ausgeht, einen Fußbereich auf, in dem er in einen im Wesentlichen trichterförmigen und/oder zylinderförmigen Kragenabschnitt übergeht. Der Fußbereich weist dabei im Rahmen der Erfindung, besonders bevorzugt im Querschnitt, einen Biegeradius auf, wobei der Biegeradius kein konstanter Radius sein muss, sondern auch ein sich über die Drehbewegung variierender Radius sein kann. Hierdurch ergibt sich gerade im Fußbereich, also im Übergangsbereich vom Innengehäuse zum Kragen ein besonders vorteiliger Spannungsverlauf des hergestellten Abgasturboladers.

Weiterhin bevorzugt weist die Kante im Querschnitt eine dem Biegeradius korrespondierende Geometrie auf. Die Kante und der Kragen liegen somit zumindest abschnittsweise aneinander, sodass hier wiederum eine besonders vorteilige formschlüssige Koppelung sichergestellt ist. Dies bietet insbesondere Vorteile bei der Positionierung des Innensystems in radialer und axialer Richtung, sowie der Maßhaltigkeit des Innengehäuses während des Betriebes des Abgasturboladers.

In einer besonders bevorzugten Ausführungsvariante der vorliegenden Erfindung sind die Kante und der Kragen zumindest abschnittsweise im Biegeradius flächig zur Anlage kommend angeordnet. Dieses wirkt sich insbesondere vorteilig auf den Betrieb des Abgasturboladers aus. Die auftretenden Bauteilausdehnungen und die daraus resultierenden Spannungen werden somit innerhalb des Innengehäuses derart homogenisiert, das während des gesamten Betriebes ein fester und dichter Sitz zwischen Innengehäuse und Lagerflansch gegeben ist, ohne dass kritische Spannungsspitzen entstehen.

In einer weiteren bevorzugten Ausführungsvariante kommen die Kante und der Kragen in Richtung der Turbinenraddrehachse auf einem Abschnitt flächig zur Anlage, wobei die Anlagefläche in Richtung der Turbinenraddrehachse orientiert ist. Hierdurch ergibt sich eine Länge, in der der Kragen des Innengehäuses flächig mit der Kante des Lagerflansches zur Anlage kommt. Die mittlere Orientierungsachse der Anlagefläche verläuft dabei im Wesentlichen in Richtung der Turbinenraddrehachse orientiert. Hierdurch ergibt sich der Vorteil, dass elastische Reserven des Innengehäuses und des Kragens vorhanden sind. Spannungen, die aufgrund verschiedener thermischer Ausdehnungen der Bauteile auftreten, können sich insbesondere in der Anlagefläche in Richtung der Turbinenraddrehachse verteilen und damit zu einer höheren Dauerhaltbarkeit des erfindungsgemäßen Abgasturboladers führen.

Weiterhin ist das Innengehäuse zweischalig ausgebildet, wobei eine lagerflanschseitige Halbschale in ihrem Querschnitt S-förmig konfiguriert ist. Im Rahmen der Erfindung ist der Kragen bereits Bestandteil eines Endabschnitts der S-förmigen Konfiguration. Dies wirkt sich insbesondere auf die kostengünstige Herstellungsmöglichkeit der Halbschale aus. Durch die S-förmige Konfiguration ist die Halbschale mittels nur eines Arbeitsvorgangs in einem Umformwerkzeug herstellbar. Ein weiterer sich ergebender Vorteil ist, dass wiederum die im Innengehäuse auftretenden Spannungen und auch die zwischen dem Innengehäuse und Außengehäuse auftretenden Spannungen durch die S-förmige Konfiguration federartig ausgeglichen werden. Das Innengehäuse hat dadurch die Möglichkeiten, sich relativ zum Außengehäuse und absolut zu sich selber auszudehnen, ohne sich dabei negativ auf den Wirkungsgrad bzw. das Betriebsverhalten des Abgasturboladers auszuwirken.

In einer weiteren bevorzugten Ausführungsvariante der vorliegenden Erfindung weist das Innengehäuse eine Wandstärke von weniger als 1,5 mm, bevorzugt weniger als 1 mm auf. Durch die erfindungsgemäße Koppelung des Innengehäuses mit dem Lagerflansch ist es möglich, das Innengehäuse mit einer besonders geringen Wandstärke herzustellen. In der Folge treten weniger Eigenspannung innerhalb des Innengehäuses auf und auch gerade beim Motorstartverhalten ergibt sich nur ein geringer Wärmeeintrag in das Innengehäuse, gegenüber einer hohen Wandstärke. In der Folge kommt der Abgasturbolader schneller auf Betriebstemperatur und somit in einen optimalen Wirkungsgradbereich. Weiterhin kommt das Gesamtsystem der Verbrennungskraftmaschine und auch der Abgasnachbehandlung ebenfalls schneller auf Betriebstemperatur, sodass gerade beispielsweise im Katalysatoranspringverhalten eine deutliche Reduzierung der Emissionswerte während des Startvorgangs realisiert werden kann.

Weitere Vorteile, Merkmale, Aspekte und Eigenschaften der vorliegenden Erfindung ergeben sich aus der folgenden Beschreibung, bevorzugte Ausführungsformen anhand der schematischen Zeichnungen. Diese dienen dem einfachen Verständnis der Erfindung. Es zeigen:
- Figur 1: einen erfindungsgemäßen Abgasturbolader in einer Schnittansicht und
- Figur 2: eine Detailschnittansicht der Koppelung zwischen Lagerflansch und Innengehäuse.

In den Figuren werden für gleiche oder ähnliche Bauteile die gleichen Bezugszeichen verwendet, auch wenn eine wiederholte Beschreibung aus Vereinfachungsgründen entfällt.

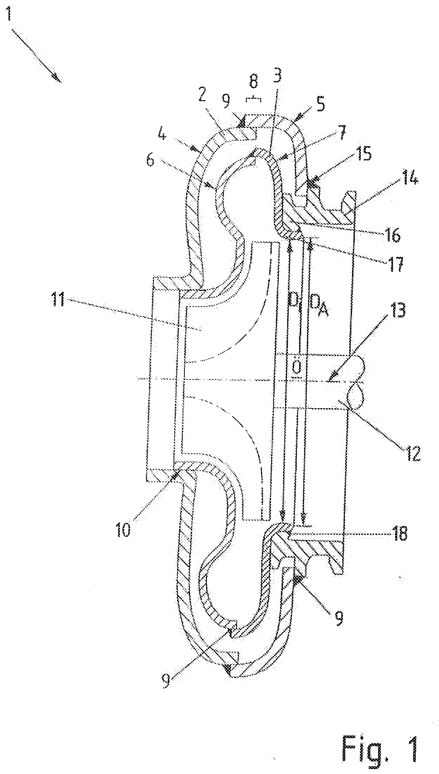

Figur 1 zeigt eine schnitttechnische Darstellung eines erfindungsgemäßen Abgasturboladers 1. Der Abgasturbolader 1 besteht dabei aus einem Außengehäuse 2 und einem in dem Außengehäuse 2 angeordneten Innengehäuse 3. Sowohl das Außengehäuse 2 als auch das Innengehäuse 3 sind zweischalig aufgebaut, wobei auf die Bildebene bezogen das Außengehäuse 2 aus einer linken Halbschale 4 und einer rechten Halbschale 5 und das Innengehäuse 3 ebenfalls aus einer linken Halbschale 6 und einer rechten Halbschale 7 bestehen.

Die Halbschalen 4, 5, 6, 7 sind in ihren Querschnitten jeweils im Wesentlichen S-förmig konfiguriert. An den jeweiligen Koppelungsbereichen sind die Halbschalen 6, 7 des Innengehäuses und auch die Halbschalen 4, 5 des Außengehäuses überlappend angeordnet. Diese Überlappung 8 ist im hier gezeigten Ausführungsbeispiel jeweils so ausgebildet, dass die jeweils rechte Halbschale 5, 7 die linke Halbschale 4, 6 überlappt. Weiterhin sind die jeweiligen Halbschalen 4, 5, 6, 7, mit einer umlaufenden Fügenaht 9 miteinander stoffschlüssig gekoppelt. Das Innengehäuse 3 ist auf der auf die Bildebene bezogenen linken Seite innerhalb der Außenschale 2 mit einem Schiebesitz 10 angeordnet.

Das Turbinenrad 11 befindet sich innerhalb des Innengehäuses 3 und ist über eine hier angedeutete Turbinenradwelle 12 innerhalb des Abgasturboladers 1 gelagert. Die Turbinenradwelle 12 bestimmt somit die Turbinenraddrehachse 13. Das Außengehäuse 2 ist auf die Bildebene bezogen auf der rechten Seite mit einem Lagerflansch 14 gekoppelt. Die Koppelung ist zum einen in einem Anlagebereich 15 formschlüssig ausgebildet, zum anderen mit einer umlaufenden Fügenaht 9 versehen. Weiterhin ist an dem Lagerflansch 14 eine innenliegende Kante 16 ausgebildet. Die Kante 16 definiert somit eine Öffnung Ö innerhalb des Lagerflansches 14. Die Öffnung Ö wird durch den Kragen 17 des Innengehäuses 3 durchgriffen, sodass der Kragen 17 an der Kante 16 zur Anlage kommt. Der Kragen 17 weist dazu einen Innendurchmesser DI auf und einen sich in Richtung des Lagerflansch 14 vergrößernden Außendurchmesser DA. Der Kragen 17 hintergreift bzw. hinterschneidet somit den Lagerflansch 14 im Bereich der Kante 16, was zu einer festen formschlüssigen Fixierung führt. Weiterhin ist die so hergestellte Lagefixierung durch eine umlaufende Fügenaht 18 zusätzlich verstärkt.

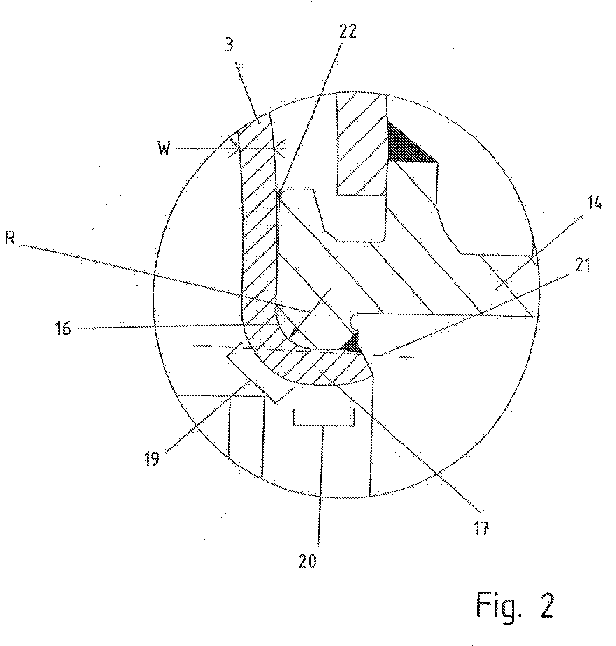

Figur 2 zeigt eine Detailansicht des Koppelungsbereichs zwischen Kragen 17 und Kante 16. Die Kante 16 ist in der hier gezeigten Ausführungsvariante mit einem Biegeradius R dargestellt, der sich in Richtung des Lagerflansches 14 erstreckt. Der Biegeradius R kann dabei als Funktion veränderbar sein und muss nicht durch eine Konstante definiert sein. Der Kragen 17 weist in einem Fußbereich 19 eine dem Biegeradius R korrespondierende Kontur auf, sodass hier im Wesentlichen eine flächige Anlage hergestellt ist.

Weiterhin kommen der Kragen 17 und die Kante 16 in einer Anlagefläche 20 im Wesentlichen flächig zur Anlage, wobei die Anlagefläche 20 eine Mittelachse 21 aufweist, die im Wesentlichen in Richtung der hier nicht gezeigten Turbinenraddrehachse 13 orientiert ist. Weiterhin weist das Innengehäuse 3 eine Wandstärke W auf, die vorzugsweise weniger als 1,5 mm dick ist. Zwischen dem Lagerflansch 14 und dem Innengehäuse 3 ist ein Entlastungsspalt 22 vorgesehen, der bei thermischen Ausdehnungen ein Spannungsabbau, einen einwandfreien Sitz des Innengehäuses 3 am Lagerflansch 14 und eine hohe Dichtigkeit sicherstellt.

### Bezugszeichen:

- 1 -: Abgasturbolader
- 2-: Außengehäuse
- 3 -: Innegehäuse
- 4 -: linke Halbschale zu 2.
- 5 -: rechte Halbschale zu 2.
- 6 -: linke Halbschale zu 3.
- 7 -: rechte Halbschale zu 3.
- 8 -: Überlappung
- 9-: Fügenaht zu 2, 3, 15
- 10-: Schiebesitz
- 11 -: Turbinenrad
- 12 -: Turbinenradwelle
- 13 -: Turbinenraddrehachse
- 14 -: Lagerflansch
- 15 -: Anlagebereich
- 16 -: Kante
- 17 -: Kragen
- 18 -: Fügenaht zu 17.
- 19 -: Fußbereich zu 17.
- 20 -: Anlagefläche
- 21 -: Mittelachse zu 20.
- 22 -: Entlastungsspalt

- W -: Wandstärke
- DI -: Innendurchmesser
- DA -: Außendurchmesser
- Ö -: Öffnung
- R -: Biegeradius

## Patentansprüche

1. Abgasturbolader (1), welcher ein Außengehäuse (2), ein Innengehäuse (3) und ein Turbinenrad (11) aufweist, wobei das Außengehäuse (2) mit einem Lagerflansch (14) stoffschlüssig verbunden ist und das Innengehäuse (3) formschlüssig mit dem Lagerflansch (14) gekoppelt ist und ein an dem Innengehäuse (3) ausgebildeter Kragen (17) an einer innenliegenden Kante (16) des Lagerflansches (14) in Richtung der Turbinenraddrehachse (13) zumindest abschnittsweise zur Anlage kommt, **dadurch gekennzeichnet, dass** der Kragen (17) die Kante (16) hinterschneidet und in einem Fügeabschnitt am lagerflanschseitigen Ende des Kragens (17) umlaufend mittels thermischem Fügen mit diesem gekoppelt ist.

2. Abgasturbolader nach Anspruch 1, **dadurch gekennzeichnet, dass** der Kragen (17) zu seinem lagerflanschseitigen Ende hin sich in seinem Durchmesser vergrößernd ausgebildet ist.

3. Abgasturbolader nach Anspruch 1 oder 2, **dadurch gekennzeichnet, dass** der Kragen (17) und die Kante (16) formschlüssig zur Anlage kommen, so dass der Kragen (17) die Kante (16) hinterschneidend angeordnet ist.

4. Abgasturbolader nach einem der Ansprüche 1 bis 3, **dadurch gekennzeichnet, dass** der Kragen (17) in einem Fußbereich (19) im Querschnitt einen Biegeradius (R) aufweist.

5. Abgasturbolader nach Anspruch 4, **dadurch gekennzeichnet, dass** die Kante (16) im Querschnitt eine dem Biegeradius (R) korrespondierende Geometrie aufweist.

6. Abgasturbolader nach Anspruch 5, **dadurch gekennzeichnet, dass** die Kante (16) und der Kragen (17) zumindest abschnittsweise im Biegeradius (R) flächig zur Anlage kommend angeordnet sind.

7. Abgasturbolader nach einem der Ansprüche 1 bis 6, **dadurch gekennzeichnet, dass** die Kante (16) und der Kragen (17) in Richtung der Turbinenraddrehachse (13) auf einem Abschnitt flächig zur Anlage kommen, wobei die Anlagefläche (20) in Richtung der Turbinenraddrehachse (13) orientiert ist.

8. Abgasturbolader nach einem der Ansprüche 1 bis 7, **dadurch gekennzeichnet, dass** das Innengehäuse (3) zweischalig ausgebildet ist, wobei eine lagerflanschseitige Halbschale in Ihrem Querschnitt S-förmig konfiguriert ist.

9. Abgasturbolader nach einem der Ansprüche 1 bis 8, **dadurch gekennzeichnet, dass** das Innengehäuse (3) eine Wandstärke (W) von weniger als 1,5 mm, bevorzugt weniger als 1 mm aufweist.

10. Abgasturbolader nach einem der Ansprüche 1 bis 9, **dadurch gekennzeichnet, dass** der Kragen (17) und die Kante (16) stoffschlüssig miteinander gekoppelt sind, vorzugsweise über eine radial umlaufende Fügenaht (18).

## Claims

1. Exhaust-gas turbocharger (1), comprising an outer housing (2), an inner housing (3) and a turbine wheel (11), wherein the outer housing (2) is connected to a bearing flange (14) in a positively bonded manner and the inner housing (3) is connected to the bearing flange (14) in a form-fit manner, and a collar (17) configured on the inner housing (3) which has at least one section in contact with an inner edge (16) of the bearing flange (14) in a direction of the rotational axis of the turbine wheel (13) **characterised in that** the collar (17) undercuts the edge (16) and is coupled with the edge by means of thermal joining in a circumferential joining zone at a bearing-flange-proximal end of the collar (17).

2. Exhaust-gas turbocharger according to claim 1, **characterised in that** the collar (17) is defined by a diameter which increases in a direction toward the bearing-flange-proximal end.

3. Exhaust-gas turbocharger according to claim 1 or claim 2, **characterised in that** the collar (17) and the edge (16) touch one another in a form-fitting manner such that the collar (17) is arranged in undercutting relationship to the edge (16).

4. Exhaust-gas turbocharger according to any one of claims 1 to 3, **characterised in that** the collar (17) has a foot region (19) defined by a bending radius (R).

5. Exhaust-gas turbocharger according to claim 4, **characterised in that** the edge (16) in cross section has a geometry corresponding to the bending radius (R).

6. Exhaust-gas turbocharger according to claim 5, **characterised in that** the edge (16) and the collar (17) touch one another with flat contact at least in one section of the bending radius (R).

7. Exhaust-gas turbocharger according to any one of claims 1 to 6, **characterised in that** the edge (16) and the collar (17) touch one another with flat contact in one section in the direction of the rotational axis of the turbine wheel (13), wherein the contact surface (20) is oriented in the direction of the rotational axis of the turbine wheel (13).

8. Exhaust-gas turbocharger according to any one of claims 1 to 7, **characterised in that** the inner housing (3) is made of two half-shells, wherein one of the half-shells on the bearing flange side has an S-shaped configuration in cross section.

9. Exhaust-gas turbocharger according to any one of claims 1 to 8, **characterised in that** the inner housing (3) has a wall thickness (W) of less than 1.5 mm, preferably less than 1 mm.

10. Exhaust-gas turbocharger according to any one of claims 1 to 9, **characterised in that** the collar (17) and the edge (16) are coupled with one another in a positively bonded manner, preferably by a radial circumferential weld seam (18).

## Revendications

1. Turbocompresseur à gaz d'échappement (1) qui présente un boîtier extérieur (2), un boîtier intérieur (3) et une roue de turbine (11), dans lequel le boîtier extérieur (2) est relié par liaison de matière à une bride de palier (14) et le boîtier intérieur (3) est couplé par complémentarité de formes à la bride de palier (14) et un collet (17) réalisé au niveau du boîtier intérieur (3) vient en appui au moins par sections contre une arête (16) intérieure de la bride de palier (14) en direction de l'axe de rotation de roue de turbine (13), **caractérisé en ce que** le collet (17) contre-dépouille l'arête (16) et est couplé dans une section de joint au niveau de l'extrémité côté bride de palier du collet (17) de manière tournante au moyen d'une jonction thermique avec celle-ci.

2. Turbocompresseur à gaz d'échappement selon la revendication 1, **caractérisé en ce que** le collet (17) est réalisé de manière à agrandir son diamètre vers son extrémité côté bride de palier.

3. Turbocompresseur à gaz d'échappement selon la revendication 1 ou 2, **caractérisé en ce que** le collet (17) et l'arête (16) viennent en appui par complémentarité de formes de sorte que le collet (17) soit agencé de manière à contre-dépouiller l'arête (16).

4. Turbocompresseur à gaz d'échappement selon l'une quelconque des revendications 1 à 3, **caractérisé en ce que** le collet (17) présente dans une zone de pied (19) en section transversale un rayon de courbure (R).

5. Turbocompresseur à gaz d'échappement selon la revendication 4, **caractérisé en ce que** l'arête (16) présente en section transversale une géométrie correspondant au rayon de courbure (R).

6. Turbocompresseur à gaz d'échappement selon la revendication 5, **caractérisé en ce que** l'arête (16) et le collet (17) sont agencés venant en appui contre la surface au moins par sections dans le rayon de courbure (R).

7. Turbocompresseur à gaz d'échappement selon l'une quelconque des revendications 1 à 6, **caractérisé en ce que** l'arête (16) et le collet (17) viennent en appui contre la surface en direction de l'axe de rotation de roue de turbine (13) sur une section, dans lequel la surface d'appui (20) est orientée en direction de l'axe de rotation de roue de turbine (13).

8. Turbocompresseur à gaz d'échappement selon l'une quelconque des revendications 1 à 7, **caractérisé en ce que** le boîtier intérieur (3) est réalisé à deux coques, dans lequel une semi-coque côté bride de palier est configurée en forme de S dans sa section transversale.

9. Turbocompresseur à gaz d'échappement selon l'une quelconque des revendications 1 à 8, **caractérisé en ce que** le boîtier intérieur (3) présente une épaisseur de paroi (W) de moins de 1,5 mm, de préférence de moins de 1 mm.

10. Turbocompresseur à gaz d'échappement selon l'une quelconque des revendications 1 à 9, **caractérisé en ce que** le collet (17) et l'arête (16) sont couplés entre eux par liaison de matière, de préférence par l'intermédiaire d'un joint (18) tournant radialement.
